# NEUE EUROPÄISCHE PATENTSCHRIFT

(11) **EP 0 286 797 B2**
(45) Veröffentlichungstag und Bekanntmachung des Hinweises auf die Entscheidung über den Einspruch: **18.12.1996**
(45) Hinweis auf die Patenterteilung: 18.12.1991
(21) Anmeldenummer: 88102109.1
(22) Anmeldetag: 12.02.1988
(51) Int. Cl.: B23D 61/02

(54) **Schneidezahn sowie mit solchen Schneidezähnen versehene Metallsägen, insbesondere Kreissägeblätter**
Saw teeth and metal cutting saw, in particular a circular saw, supplied with such teeth
Dentelure et scie à métaux, en particulier lame de scie circulaire munie de telles dents

(30) Priorität: 03.04.1987 DE 3711228
(43) Veröffentlichungstag der Anmeldung: 19.10.1988
(73) Patentinhaber: Gustav Wagner Maschinenfabrik GmbH & Co. KG,i.K., 72760 Reutlingen (DE)
(72) Erfinder: Henning, Klaus, D-7410 Reutlingen 1 (DE); Maurer, Jörg, D-7410 Reutlingen 1 (DE)
(74) Vertreter: Popp, Eugen, Dr.

(56) Entgegenhaltungen:
- DE-A- 2 743 304
- DE-A- 2 838 424
- DE-A- 2 931 965
- DE-U- 7 418 132
- FR-A- 2 231 463
- FR-A- 2 294 011
- US-A- 4 604 933

## Beschreibung

Die Erfindung betrifft eine Metallsäge, insbesondere Kreissäge, gemäß dem Oberbegriff des Patentanspruches 1.

Kreissägeblätter mit am Umfang abwechselnd aufeinanderfolgend angeordneten Vorschneide- und Nachschneidezähnen, die in entsprechenden Taschen des Sägeblatts hart eingelötet sind und jeweils aus Hartmetall bestehen, sind allgemein bekannt (Industrie-Anzeiger, 93. Jg., Nr. 105 vom 17.12.1971, Seite 2687, 2688; DE-A-28 38 424; US-A-4,604,933). Der Spanwinkel sowohl der Vorschneide- als auch Nachschneidezähne ist beim Stand der Technik jeweils negativ, um die Biegekomßonente und die Zugspannung an der Spanfläche und damit die Belastung derselben gering zu halten. In der Zitierten Veröffentlichung "Industrie-Anzeiger" ist zwar bei der Diskussion von hartmetallbstückten Kreissägeblättern von einem negativen Fasenspanwinkel die Rede; gemeint ist damit jedoch ganz offensichtlich die eigentliche Spanfläche, die einen negativen Spanwinkel aufweist.

Gleichermaßen verhält es sich beim Stand der Technik nach der US-A-4,604,933, von der vorliegende Erfindung ausgeht. Auch dort wird für den Nachschneidezahn nur eine negative Spanfläche, nicht dagegen eine negative Fase vorgeschlagen.

Als weitere Möglichkeit zur Reduzierung von Zahnbelastungen ist es auch bekannt, zusätzlich eine oder mehrere Spanteilerrinnen vorzusehen. die jeweils mit ihrem hinteren Ende in die Hauptfreifläche des Schneidezahns einmünden. Es wird dazu u. a. auf die DE-A-2 931 965 oder EP-A-0 065 744 verwiesen.

Schließlich ist es auch bekannt. zur Stabilisierung der Schneidkante diese in eine Hauptschneide und zwei seitlich daran anschließende Nebenschneiden zu unterteilen unter entsprechender Ausbildung einer Hauptspanfläche und Nebenspanflächen, deren Neigungswinkel zur Hauptspanfläche jeweils negativ ist, und zwar aus den oben genannten Gründen. Diesbezüglich wird auf die FR-A-22 31 463 verwiesen.

Die bekannten Konstruktionen bzw. Geometrien sind zum Sägen von un- oder niedriglegierten Stählen zufriedenstellend; auf jeden Fall besser als Metallsägen mit SS-Schneidezähnen. Hochlegierte Stähle, wie z. B. X20, Xr13, lassen sich jedoch mit den bekannten Metallsägen unter wirtschaftlichen Gesichtspunkten nicht sägen. Bei Verwendung herkömmlicher Hartmetall-Vorschneide- und - Nachschneidezähne sind diese innerhalb verhältnismäßig kurzer Zeit zerstört und das Sägeblatt dementsprechend unbrauchbar. Die beim Sägen hochlegierter Stähle auf die Schneidkante und die Spanfläche wirkenden Kräfte und die im Werkstückstoff und Schneidstoff herrschenden Temperaturen sind wohl Ursache für einen erhöhten Verschleiß. Dabei ist der Spanflächenverschleiß durch Diffusion besonders hoch. Dieser wird durch extrem hohe Temperaturen in der Fließschicht auf der Spanunterseite gegenüber der Scherebene und der Schneidkante begünstigt. Es kommt innerhalb kürzester Zeit zur sogenannten Auskolkung auf der Spanfläche und zum Bruch der Schneidkante. Dieser Verschleiß macht das Sägen hochlegierter Stähle unwirtschaftlich. Aus diesem Grunde werden Werkstücke, z. B. Rohre oder Stangenprofil, aus hochlegiertem Stahl z. B. mittels Schweißbrenner getrennt oder mit HSS-Sägeblättern gesägt. Aber auch diese Art der Trennung ist äußerst unwirtschaftlich. Es besteht daher ein großes Bedürfnis. Metallsägen, insbesondere Metall-Kreissägen zu entwickeln, mit denen sich auch hochlegierte Stähle wirtschaftlich trennen bzw. sägen lassen.

Der vorliegenden Erfindung liegt die Aufgabe zugrunde, eine Metallsäge der genannten Art zu schaffen, mit der sich auch hochlegierte Werkstoffe wirtschaftlich trennen bzw. sägen lassen.

Diese Aufgabe wird durch die kennzeichnenden Merkmale des Patentanspruches 1 gelöst.

Durch die erfindungsgemäßen Maßnahmen erhält man eine Metallsäge mit überraschend hoher Stabilität der Schneiden von Vor- und Nachschneidezähnen, die jeweils als Einsätze aus Hartmetall ausgebildet und in entsprechenden Taschen des Sägekörpers, insbesondere Sägeblatts, hart eingelötet sind. Sowohl der Freiflächenverschleiß als auch Spanflächenverschleiß durch Diffusion sowie mechanischen Abrieb und Verzunderung sind minimal, und zwar auch und gerade beim Sägen hochlegierter Werkstoffe.

Durch die erfindungsgemäß vorgesehene Spanleitstufe wird darüber hinaus der Rolldurchmesser des Spanes erheblich reduziert, so daß dieser von selbst aus der entsprechenden Zahnlükke herausfällt bzw. eine kleinere Zahnteilung möglich ist, die zu kürzeren Schnittzeiten führt. Damit entfällt auch eine sonst übliche Reinigung der Zahnlücken von eingeklemmten Spänen. Die Spanabfuhr wird also erheblich verbessert. Bei konkav gewölbter Spanfläche wird darüber hinaus die Flächenpressung und damit der Diffusionsverschleiß im kritischen Bereich der Spanleitfläche erheblich verringert, wodurch eine zusätzliche Stabilisierung der Schneidkante und damit höhere Standzeiten erreicht werden.

Die Maßnahme nach Anspruch 3 ist ebenfalls von nicht untergeordneter Bedeutung, wonach die äußere Fase beim Nachschneidezahn eine Breite aufweisen soll, die maximal gleich der Breite der negativen Fase, vorzugsweise kleiner als die Breite derselben, ist. Dadurch ist sichergestellt, daß sich im Eckbereich der Schneide kein positiver Fasenwinkel ausbildet, der zum Eckenbruch führen würde.

In an sich bekannter Weise kann insbesondere beim Nachschneidezahn die Spanleitfläche zwei äußere, stumpfwinklig nach hinten geneigte Teilflächen umfassen, wobei zumindest der sich an die derart ausgebildete Spanleitfläche unmittelbar anschließende Bereich der Brustfläche des Schneidezahns in entsprechender Weise geneigt ausgebildet ist. Durch diese Maßnahmen läßt sich eine gleichmäßige Tiefe der Spanleitstufe über deren gesamte Breite sicherstellen mit der Folge eines durchgehend gleich großen Span-Rollradius.

Die Maßnahmen nach Anspruch 5 sind für extreme Schneidbedingungen vorteilhaft, z. B. beim Sägen inhomogener Werkstücke, z. B. Werkstücke mit Lunkern oder dgl.

Die Ausbildung eines Sägeblatts nach Anspruch 6 ist für das Schleifen bzw. Nachschleifen der Schneidezähne besonders vorteilhaft, da die Bearbeitung bzw. Nachbearbeitung in den Schneidkörper hinein enfolgt, so daß die Schneidezähne mehrmals nachbearbeitet werden können, ohne daß eine kritische Schwächung derselben zu befürchten ist.

Nachstehend werden Ausführungsbeispiele der erfindungsgemäßen Konstruktion anhand der beigefügten Zeichnung näher erläutert. Es zeigen:
- Fig. 1: einen Teil eines Kreissägeblatts mit Hartmetall-Schneidezähnen, und zwar Vor- und Nachschneidezahn. gemäß Erfindung in schematischer Seitenansicht;
- Fig. 2: einen erfindungsgemäß ausgebildeten Vorschneidezahn in Seitenansicht und vergrößertem Maßstab;
- Fig. 3: den Vorschneidezahn nach Fig. 2 in Vorderansicht;
- Fig. 4: den Vorschneidezahn nach Fig. 2 bzw. 3 in Draufsicht;
- Fig. 5: einen erfindungsgemäß ausgebildeten Nachschneidezahn in Seitenansicht und vergrößertem Maßstab;
- Fig. 6: den Nachschneidezahn nach Fig. 5 in Vorderansicht;
- Fig. 7: den Nachschneidezahn nach Fig. 5 bzw. 6 in Draufsicht,
- Fig. 8: eine abgewandelte Ausführungsform eines erfindungsgemäß ausgebildeten Nachschneidezahns in Vorderansicht;
- Fig. 9: den Nachschneidezahn nach Fig. 8 in Seitenansicht;
- Fig. 10 bis 12: weitere Abwandlungen eines erfindungsgemäß ausgebildeten Schneidezahns in Teil-Seitenansicht;
- Fig. 13: einen erfindungsgemäß ausgebildeten Schneidezahn mit Spanleitstufe, negativer Fase und Spanteilerrille in Vorderansicht; und
- Fig. 14: den Schneidezahn nach Fig. 13 in Seitenansicht.

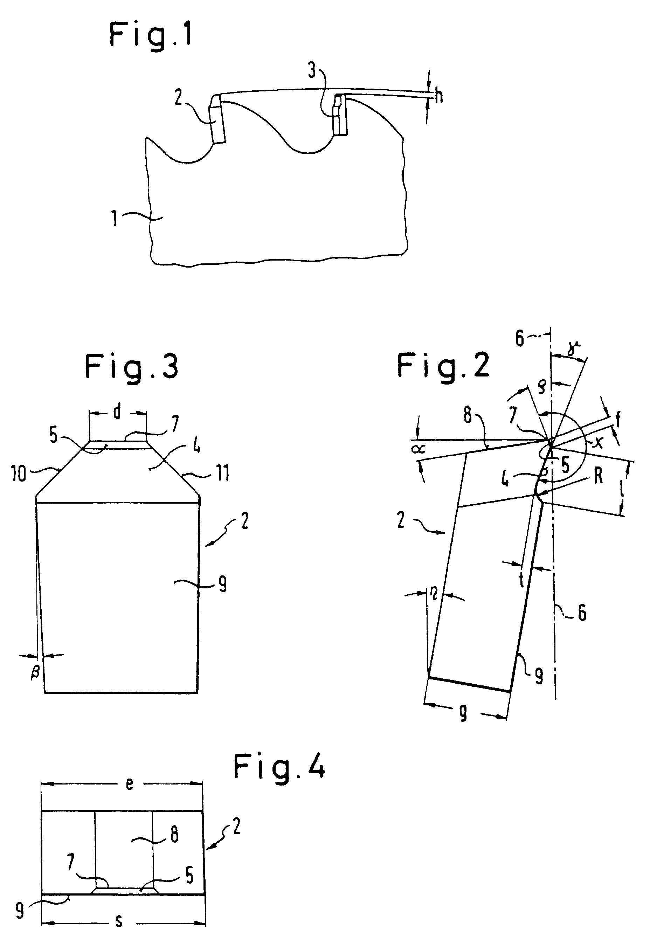

In Fig. 1 ist in verkleinertem Maßstab und in Seitenansicht ein Teil eines Kreissägeblattes 1 dargestellt, an dessen Umfang abwechselnd Vorschneidezähne 2 und Nachschneidezähne 3 angeordnet sind, deren Schneidkanten an in Taschen hart eingelöteten Einsätzen aus Hartmetall ausgebildet sind. Die Vorschneidezähne 2 überragen die Nachschneidezähne 3 in radialer Richtung um einen vorbestimmten Betrag "h" in herkömmlicher Größenordnung.

Gemäß den Fig. 2 bis 4 ist eine erste Ausführungsform eines erfindungsgemäß ausgebildeten Vorschneidezahns 2 definiert durch einen Hauptfreiwinkel α , positiven Spanwinkel γ , radialen Freiwinkel β, ein tangentiales Freimaß (s-e), eine Spanleitstufe 4 und negative Fase 5. Der Winkel χ zwischen der Phasenfläche 5 und Spanfläche bzw. Spanleitfläche 4 beträgt zwischen etwa 190° und 240° , insbesondere etwa 205° bis 230° , im Ausführungsbeispiel 210°. Der Fasenwinkel ρ ist, bezogen auf die Sägeblättmitte bzw. Mittenebene 6, negativ und beträgt etwa -10° bis -30°, insbesondere -15° bis -25°, beim Ausführungsbeispiel - 14°. Der Spanwinkel γ ist, bezogen auf die Sägeblatt-Mittenebene 6, positiv und beträgt etwa + 10° bis + 30°, beim Ausführungsbeispiel + 16°.

Mit η ist der Zahnsitzwinkel im Sägeblatt gekennzeichnet. Bezogen auf die Sägeblatt-Mittenebene ist bei dem dargestellten Ausführungsbeispiel dieser Winkel positiv und beträgt 20°. Er kann bis zu 30°, bezogen auf die Sägeblatt-Mittenebene, sein.

Der radiale Freiwinkel β (s. Fig. 3) beträgt zwischen 0,5° bis 2,5°, vorzugsweise etwa 1,0° bis 1,5° Dabei handelt es sich um eine an sich bekannte Größe. Ähnlich verhält es sich bei dem tangentialen Freimaß (s-e), welches etwa 0,03 bis 0,15 mm betragen kann.

Die Spanleitfläche 4 des Vorschneidezahns 2 ist in Vorderansicht trapezförmig ausgebildet, wie Fig. 3 erkennen läßt, wobei die Hauptschneidkante 7 an der kleineren Grundlinie ausgebildet ist. Die Schneidkante 7 wird durch die Schnittlinie zwischen der negativen Fase 5 und der Hauptfreifläche 8 definiert. Die Breite "d" der Hauptfreifläche beträgt etwa 1/3 der maximalen Breite des Vorschneidezahns. Die Dicke "g" des Vorschneidezahns beträgt etwa die Hälfte der maximalen Breite "s" bzw. 1/3 der Höhe desselben.

Die Breite "f" der negativen Fase 5 beträgt mindestens 0,1 mm; maximal entspricht sie jedoch der 5-fachen Spandikke, vorzugsweise etwa der 1,0- bis 2,0-fachen Spandicke. Beim Ausführungsbeispiel beträgt die Fasenbreite "f" etwa 0,4 mm.

Die Länge "l" der Spanleitstufe 4 beträgt zwischen 0,1 bis 5,0 mm bzw. bis maximal 1/2 der Teilung, beim Ausführungsbeispiel 3,0 mm. die Tiefe "t", der Spanleitstufe beträgt zwischen etwa 0,1 bis 0,6 mm bzw. bis maximal 1/4 der Teilung, vorzugsweise 0,2 bis 0,4 mm, beim Ausführungsbeispiel etwa 0,45 mm.

Der übergang zwischen der Spanleitstufe 4 und der Brustfläche 9 des Schneidezahns ist in Draufsicht konkav gewölbt, wobei der Wölbungsradius "R" bis zu 1/2 der Teilung betragen kann.

An die zentral angeordnete Hauptschneidkante 7, die zwischen der Hauptfreifläche 8 und der negativen Fase 5 ausgebildet ist, schließen sich seitlich Nebenschneidkanten 10 und 11 an, die gegenüber der Hauptschneidkante 7 unter Ausbildung eines trapezförmigen Umrisses der Spanleitfläche geneigt verlaufen (Fig. 3).

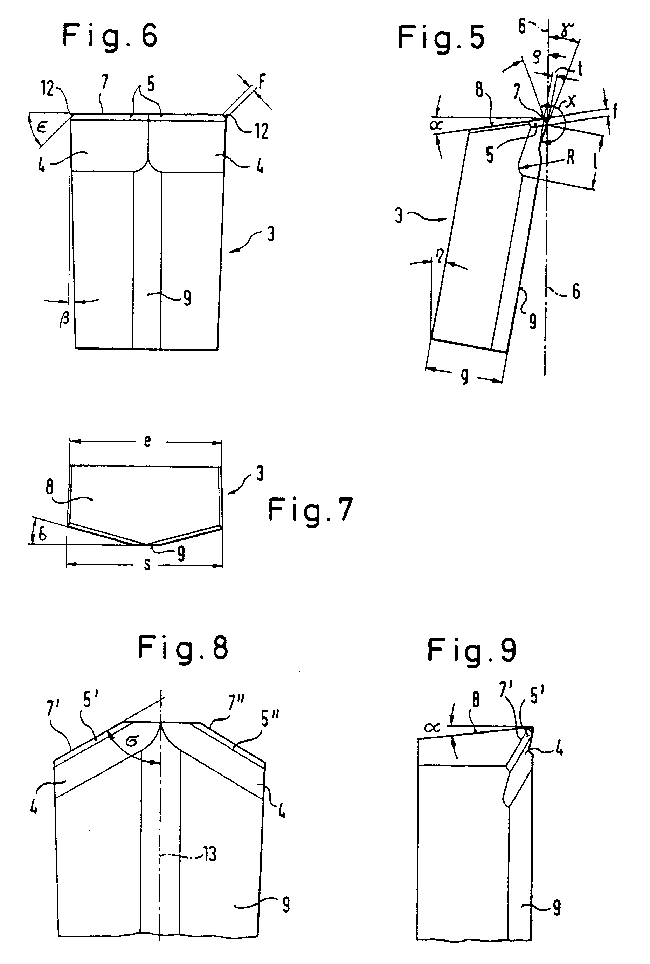

In den Fig. 5 bis 7 ist eine erste Ausführungsform für einen Nachschneidezahn dargestellt, wobei die Darstellung derjenigen nach den Fig. 2 bis 4 entspricht. Die anhand des beschriebenen Vorschneidezahnes bereits erläuterten Konstruktionsmerkmale, die auch der Nachschneidezahn nach den Fig. 5 bis 7 aufweist, sind mit denselben Bezugsziffern gekennzeichnet, wobei die Winkel α, ρ, γ, η, β ähnlich dimensioniert sind wie die entsprechenden Winkel des beschriebenen Vorschneidezahnes. Das gleiche gilt für die Abmessung der Spanleitstufe 4 sowie die Breite "f" der negativen Fase 5. Auch das tangentiale Freimaß (s-e) entspricht demjenigen des Vorschneidezahnes. Schließlich entsprechen auch die äußeren Abmessungen des Nachschneidezahnes 3, nämlich Höhe, Breite und Dicke, denjenigen des beschriebenen Vorschneidezahnes 2.

Der Freiwinkel α sowohl von Vorschneidezahn 2 als auch Nachschneidezahn 3 beträgt etwa 5° bis 12°, vorzugsweise etwa 7° bis 9°.

Der Nachschneidezahn nach den Fig. 5 bis 7 unterscheidet sich von dem Vorschneidezahn nach den Fig. 2 bis 4 zum einen durch die stumpfwinklige Ausbildung der Spanleitfläche 4 samt negativer Fase 5 sowie Brustfläche 9, und zum anderen durch die Ausbildung tangentialer Fasen 12 mit der Fasenbreite "F" und einen negativen Fasenwinkel ε von 20° bis 60°, vorzugsweise etwa 30° . Die Breite der Tangentialfase 12 ist höchstens gleich, vorzugsweise kleiner als die Breite "f" der negativen Schneidfase 5, die sich beim Nachschneidezahn jeweils über die gesamte Breite der Spanleitfläche 4 erstreckt, d. h. jeweils bis zu den beiden Tangentialfasen 12.

Die stumpfwinklige Ausbildung sowohl der Span- bzw. Spanleitfläche 4 als auch der Brustfläche 9 ist durch den negativen Neigungswinkel δ (s. Fig. 7) definiert, welcher etwa 10° bis 30°, vorzugsweise etwa 17°, beträgt. Beim Vorschneidezahn nach den Fig. 2 bis 4 ist der Winkel δ Null, wie Fig. 4 erkennen läßt.

Durch die stumpfwinklige Ausbildung der Brustfläche 9 entsprechend der stumpfwinkligen Ausbildung der Spanleitfläche 4 ist gewährleistet, daß sich die Geometrie, insbesondere die Tiefe "t". der Spanleittfäche 4 sich über die gesamte Breite des Nachschneidezahns 3 nicht ändert. Dabei ist zu berücksichtigen, daß der Fertigschnitt insbesondere im Randbereich des Nachschneidezahns erfolgt, so daß es vor allem dort auf die Einhaltung der vorbestimmten Geometrie der Spanleitfläche 4 ankommt.

In den Fig. 8 und 9 ist eine abgewandelte Ausführungsform eines Nachschneidezahns in Vorder- und Seitenansicht dargestellt, wobei sich diese Ausführungsform von derjenigen nach den Fig. 5 bis 7 dadurch unterscheidet, daß der Schneidkante nur in den beiden wirksamen Randbereichen eine negative Fase 5', 5'' zugeordnet ist, und daß die entsprechenden "Rand-Schneidkanten" 7', 7'' zur Schneidkörper-Mittenebene 13, die sich parallel zur Trennebene erstreckt bzw, diese definiert, hin geneigt sind. In entsprechender Weise sind die Spanleitflächen 4 zur Schneidkörper-Mittenebene 13 hin geneigt. Diese Ausführungsform des Nachschneidezahns eignet sich besonders gut zur Bewältigung extremer Schneidbedingungen, z. B. zum Sägen von inhomogenen Werkstücken, z. B. Werkstücken mit Lunkern oder dgl. Vorzugsweise sind auch bei dieser Ausführungsform negative Tangentialfasen vorgesehen.

Es versteht sich von selbst, daß es auch bei der Ausführungsform des Nachschneidezahnes nach den Fig. 5 bis 7 genügen kann, nur den beiden wirksamen Randbereichen der Schneidkante 7 jeweils eine negative Schneidfase zuzuordnen. Die zusätzliche Abwinkelung der Randschneidkanten samt negativer Fase entsprechend den Fig. 8 und 9 ist - wie ausgeführt -nur für extreme Schneidbedingungen besonders vorteilhaft.

Der Neigungswinkel der Randschneidkanten 7', 7'' samt negativen Fasen 5', 5'' zur Schneidkörper-Mittenebene 13 beträgt etwa zwischen 35° bis 80°, insbesondere zwischen etwa 45° bis 70°, insbesondere etwa 60°. Dieser Neigungswinkel ist in Fig. 8 mit σ gekennzeichnet.

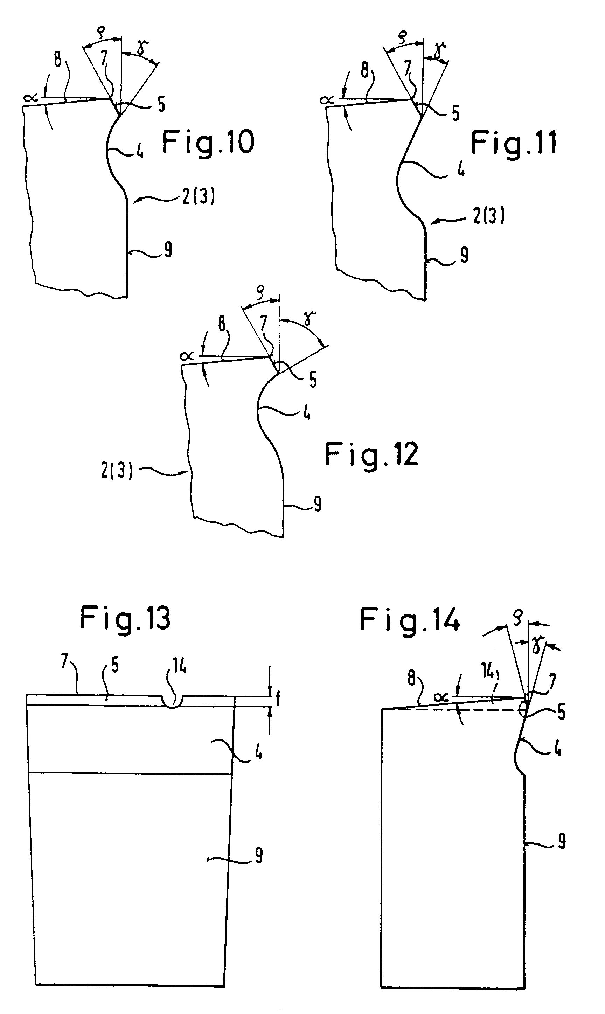

In den Fig. 10 bis 12 sind Abwandlungen der Spanleitstufe schematisch dargestellt, wobei es sich jeweils um konkav gewölbte Spanleitflächen handelt. Bei der Ausführungsform nach Fig. 10 ist der Wölbungsradius über die gesamte Spanleitfläche etwa konstant. Bei der Ausführungsform nach Fig. 11 nimmt der Wölbungsradius der Spanleitfläche ausgehend von der negativen Fase 5 stetig ab. Umgekehrt verhält es sich bei der Ausführungsform nach Fig. 12.

Die Ausführungsformen nach den Fig. 10 bis 12 eignen sich sowohl für den Vorschneidezahn 2 als auch Nachschneidezahn 3.

Die Ausführungsformen nach den Fig. 13 und 14 zeichnen sich gegenüber den vorbeschriebenen Ausführungsformen dadurch aus, daß zusätzlich noch eine Spanteilerrille 14 vorgesehen ist, die mit ihrem hinteren Ende in die Hauptfreifläche 8 einmündet. Dabei handelt es sich um eine an sich bekannte Maßnahme zur Teilung des Spans. Sie ist jedoch nicht bekannt in Kombination mit der vorbeschriebenen Geometrie von Vorschneidezahn 2 oder Nachschneidezahn 3.

Die erfindungsgemäße Schneidengeometrie eignet sich sowohl für Kreissägen als auch Bandsägen. Entsprechend ausgebildete Schneidezähne können im Extremfall integraler Bestandteil eines Kreissägeblattes sein. In der Regel werden sie jedoch in am Umfang eines Kreissägeblattes angeordneten Taschen dauerhaft befestigt, z. B. durch Hartlöten. Grundsätzlich ist jedoch bei entsprechender Dicke des Kreissägeblattes auch eine Klemmbefestigung der Schneidezähne denkbar. In diesem Fall weisen die Schneidezähne bereits vorab die beschriebene Geometrie auf. Nach der Klemmontage bedarf es gegebenenfalls nur noch eines Nachschleifens.

Sämtliche in den Unterlagen offenbarten Merkmale werden als erfindungswesentlich beansprucht, soweit sie einzeln oder in Kombination gegenüber dem Stand der Technik neu sind, wobei das Schwergewicht der Erfindung auf dem Gebiet der Kreissägeblätter liegt.

## Patentansprüche

1. Metallsäge, insbesondere Kreissäge, mit abwechselnd aufeinanderfolgend angeordneten Vor- und Nachschneidezähnen (2, 3), deren Schneidkanten an in Taschen hart eingelöteten Einsätzen aus Hartmetall ausgebildet sind und deren Geometrie bestimmt ist durch den Hauptfreiwinkel (α), Spanwinkel (γ), radialen Freiwinkel (β), das tangentiale Freimaß (s-e), sowie beim Nachschneidezahn (3) durch eine äußere Fase (12) mit Fasenwinkel (ε),
dadurch gekennzeichnet,
daß an den Einsätzen der Vor- und Nachschneidezähne eine Spanleitstufe mit ebener oder konkav gewölbter Spanleitfläche (4) vorgesehen ist, die einen positiven Spanwinkel (γ) von +10° bis +30° sowie folgende Abmessungen aufweist:
- Tiefe (t) von etwa 0,1 bis 0,6 mm, insbesondere 0,2 bis 0,4 mm;
- Länge (ℓ) von etwa 0,1 bis 5,0 mm, insbesondere 2,0 bis 3,0 mm und
- Übergangsradius (R) zwischen Spanleitstufe und Brustfläche (9) des Schneidezahns (2 bzw. 3) zwischen etwa 0,1 bis 3,0 mm, vorzugsweise etwa 1,0 bis 2,0 mm,
wobei die Schneidkante (7; 7'; 7'') durch eine negative Fase (5; 5'; 5'') mit einem Fasenwinkel (ρ) von -10° bis -30° und einer Breite (f) von 0,1 bis 0,4 mm stabilisiert ist.

2. Metallsäge nach Anspruch 1,
**dadurch gekennzeichnet**, daß bei gewölbter Spanleitfläche (4) der Wölbungsradius entweder konstant (Fig. 10) oder ausgehend von der negativen Fase (5; 5', 5'') stetig zu-oder abnimmt (Fig. 12 bzw. 11).

3. Metallisäge Anspruch 1 oder 2,
**dadurch gekennzeichnet**, daß beim Nachschneidezahn (3) die äußere Fase (12) eine Breite (F) aufweist, die maximal gleich der Breite (f) der negativen Schneidfase (5; 5', 5''), vorzugsweise jedoch kleiner, insbesondere um etwa 1/3 kleiner, als die Breite (f) derselben. ist.

4. Metallsäge nach einem oder mehreren der Ansprüche 1 bis 3,
**dadurch gekennzeichnet**, daß mindestens eine mit ihrem hinteren Ende in die Hauptfreifläche (8) einmündende Spanteilerrille (14) vorgesehen ist.

5. Metallsäge nach einem oder mehreren der Ansprüche 1 bis 4,
**dadurch gekennzeichnet**, daß beim Nachschneidezahn (3) zumindest die beiden äußeren Abschnitte (7, 7'') der Schneidkante einschließlich zugeordneter negativer Schneidfase (5', 5'') zur Sägeblattachse hin geneigt sind (Fig. 8 und 9).

6. Metallsäge nach einem oder mehreren der Ansprüche 1 bis 5,
**dadurch gekennzeichnet**, daß der Plattensitzwinkel (η) maximal + 30°, vorzugsweise + 10°, beträgt.

## Claims

1. Metal saw, in particular a circular saw, having roughing and finishing teeth (2, 3) which are arranged in alternate sequence and whose cutting edges are formed on carbide inserts brazed in pockets and whose geometry is determined by the main clearance angle (α), rake angle (γ), radial clearance angle (β), the tangential clearance dimension (s-e) and also, in the case of the finishing tooth (3), by an out chamfer (12) having a chamfer angle (ε), characterised in that a ground-in chip breaker having a flat or concavely curved chip-breaker face (4) is provided on the inserts of the roughing and finishing teeth, which ground-in chip breaker has a positive rake angle (γ) of +10° to +30°, and the following dimensions:
• depth (t) from about 0.1 to 0.6 mm, in particular 0.2 to 0.4 mm;
• length (l) from about 0.1 to 5.0 mm, in particular 2.0 to 3.0 mm, and
• transition radius ® between ground-in chip-breaker and front face (9) of the cutting tooth (2 or 3) between about 0.1 to 3.0 mm, preferably about 1.0 to 2.0 mm,
• the cutting edge (7; 7', 7) being stabilised by a negative chamfer (5; 5', 5) having a chamfer angle (ρ) of -10° to -30°, and a width (f) from 0.1 to 0.4 mm.

2. Metal saw according to claim 1, characterised in that, in the case of a curved chip-breaker face (4), the radius of curvature is either constant (Fig. 10) or increases or decreases continuously (Figs. 12 or 11) starting from the negative chamfer (5;, 5', 5).

3. Metal saw according to claim 1 or 2, characterised in that, at the finishing tooth (3), the outer chamfer (12) has a width (F) which is at most the same as the width (f) of the negative cutting chamfer (5; 5', 5) but is preferably smaller, in particular about 1/3 smaller, than the width (f) of the same.

4. Metal saw according to one of claims 1 to 3, characterised in that at least one chip-divider groove (14) is provided which leads with its rear end into the main flank (8).

5. Metal saw according to one or more of claims 1 to 4, characterized in that, at the finishing tooth (3), at least the two outer sections (7', 7 )of the cutting edge including allocated negative cutting chamfer (5', 5) are inclined towards the saw blade axis (Figs. 8 and 9).

6. Metal saw according to one or more of claims 1 to 5, characterized in that the tip seating angle (η) is at most +30°, preferably +10°.

## Revendications

1. Scie à métaux, en particulier scie circulaire, comprenant des dents d'attaque et d'arasage (2, 3) disposées en alternance, dont les tranchants sont conformés sur des insertions en métal dur brasées dans des poches et dont la géométrie est déterminée par l'angle de dépouille principal (α), l'angle de coupe (γ), l'angle de dépouille radial (β), la dimension tangentielle non tolérancée (s-e) ainsi que, pour la dent d'arasage (3), par une face de dépouille extérieure (12) avec l'angle de dépouille (ε), caractérisée en ce que sur les insertions des dents d'attaque et d'arasage est prévu un gradin de guidage de copeaux avec une face de guidage de copeaux (4) plane ou concave qui présente un angle de coupe positif (γ) de +10 à +30°, ainsi que les dimensions suivantes :
- profondeur (t) comprise sensiblement entre 0,1 et 0,6 mm, en particulier entre 0,2 et 0,4 mm;
- longueur (l) comprise sensiblement entre 0,1 et 5,0 mm, en particulier entre 2,0 et 3,0 mm, et
- rayon de transition (R) entre le gradin de guidage de copeaux et la face frontale (9) de la dent coupante (2 et respectivement 3) compris sensiblement entre 0,1 et 3,0 mm, de préférence entre environ 1,0 et 2,0 mm,
le tranchant (7; 7',7'') étant stabilisé par une face de dépouille négative (5; 5', 5'') avec un angle de la face de dépouille (ρ) de -10 à -30° et avec une largeur (f) de la face de dépouille comprise entre 0,1 mm et 0,4 mm.

2. Scie à métaux selon la revendication 1, caractérisée en ce que, pour une face de guidage de copeaux (4) courbe, le rayon de courbure est constant (fig. 10) ou qu'il augmente ou diminue progressivement à partir de la face de dépouille négative (5; 5', 5'') (fig. 12 et respectivement 11).

3. Scie à métaux selon l'une des revendications 1 et 2, caractérisée en ce que pour la dent d'arasage (3), la face de dépouille extérieure (12) présente une largeur (F) qui est au maximum égale à la largeur (f) de la face de dépouille négative (5; 5', 5''), mais de préférence inférieure, et notamment inférieure d'environ 1/3, à la largeur (f) de celle-ci.

4. Scie à métaux selon l'une ou plusieurs des revendications 1 à 3, caractérisée en ce qu'elle comprend au moins une gorge de division de copeaux (14) dont l'extrémité postérieure débouche dans la face de dépouille principale (8).

5. Scie à métaux selon l'une ou plusieurs des revendications 1 à 4, caractérisée en ce que pour la dent d'arasage (3), au moins les deux sections extérieures (7, 7'') du tranchant, y compris la face de dépouille négative (5', 5'') associée, sont inclinées en direction de l'axe de la lame de scie (fig. 8 et 9).

6. Scie à métaux selon l'une ou plusieurs des revendications 1 à 5, caractérisée en ce que l'angle d'ajustement des plaquettes (η) est au maximum de +30° et de préférence de +10°.
